# EUROPÄISCHE PATENTSCHRIFT

(11) **EP 3 083 277 B1**
(45) Veröffentlichungstag und Bekanntmachung des Hinweises auf die Patenterteilung: **01.05.2019**
(21) Anmeldenummer: 14792496.3
(22) Anmeldetag: 31.10.2014
(51) Int. Cl.: B60C 9/20

(54) **FAHRZEUGLUFTREIFEN**
PNEUMATIC VEHICLE TYRE
PNEUMATIQUE DE VÉHICULE

(30) Priorität: 18.12.2013 DE 102013226443
(43) Veröffentlichungstag der Anmeldung: 26.10.2016
(73) Patentinhaber: Continental Reifen Deutschland GmbH, 30165 Hannover (DE)
(72) Erfinder: LACKO, Michal, 020 01 Puchov (SK); GEHLAUF, Matthias, 31319 Sehnde (DE); WACHMANN, Fabian, 30419 Hannover (DE)
(74) Vertreter: Finger, Karsten
(86) Internationale Anmeldenummer: PCT/EP2014/073410
(87) Internationale Veröffentlichungsnummer: WO 2015/090703

(56) Entgegenhaltungen:
- DE-A1-102010 016 550
- US-A1- 2006 169 381
- US-A1- 2007 131 331
- US-A1- 2011 253 279

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen eine beschränkte Umfangssteifigkeit auf. Die hierdurch ermöglichte Beweglichkeit der Gürtelränder kann sich negativ auf die Haltbarkeit des Reifens auswirken. Der Gürtel kann darüber hinaus im Betrieb radialen Expansionen unterliegen. Dieses Wachstum kann zu überhöhtem ungleichmäßigem Abrieb des Reifens führen.

Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte 0°-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Der Einfluss der 0°-Lage beschränkt sich jedoch im Wesentlichen auf die radial äußere Arbeitslage. Die innere Arbeitslage ist jedoch mit einer verbleibenden Beweglichkeit ausgebildet, mit weiterhin negativen Einflüssen auf Haltbarkeit und Abrieb.

Darüber hinaus ist gelegentlich - beispielsweise aus der WO2011/131383A1 - eine Ausbildung eines Nutzfahrzeugluftreifens mit einer Vier-Lagen-Gürtelanordnung vorgeschlagen worden mit einer radial inneren Sperrlage mit Stahlkorden, die einen Winkel von 50° zur Umfangsrichtung einschließen. Radial außerhalb der Sperrlage sind zwei Arbeitslagen ausgebildet. Eine 0°-Lage ist radial zwischen den beiden Arbeitslagen ausgebildet ist. Die beiden Arbeitslagen sind bei diesen Ausbildungen weiterhin im Kreuzverband ausgebildet und ihre Stahlkorde sind mit Winkeln von jeweils 20° zur Umfangsrichtung ausgerichtet. Derartige Ausbildungen ermöglichen eine hohe Umfangssteifigkeit und gegenüber einem herkömmlichen Nutzfahrzeugluftreifen eine verbesserte Haltbarkeit und ein verbessertes Abriebsbild. Dennoch kann auch bei derartigen Ausbildungen von Nutzfahrzeugreifen bei starker Druckbelastung im Zentrum des Footprints und demgegenüber deutlich reduziertem Druck im Schulterbereich noch unerwünscht stark ausgeprägter ungleichmäßiger Abrieb auftreten.

Aus der DE 10 2010 016 550 A1 ist ein Fahrzeugluftreifen für Nutzfahrzeuge bekannt, welcher vier radial übereinander angeordnete Gürtellagen aufweist. Dabei sind die zweite und dritte Gürtellage jeweils axial mehrgeteilt ausgebildet. Die axialen Randabschnitte sind anders ausgebildet als der der axial mittlere Abschnitt. In einem axialen Erstreckungsbereich um den Äquator herum ist der Fahrzeugluftreifen mit Gürtellagen ausgebildet, die den Merkmalen des Oberbegriffs von Anspruch 1 entsprechen. Außerhalb dieses Bereichs ist der Gürtel anders ausgebildet.

Der Erfindung liegt die Aufgabe zugrunde einen derartigen Fahrzeugluftreifen für Nutzfahrzeuge mit wenigstens vier Gürtellagen zu schaffen, bei dem in einfacher Weise unter Nutzung der Vorteile der Ausbildung eines Vierlagengürtels mit zwei Arbeitslagen, einer Nulllage und einer Sperrlage weiter reduzierter und vergleichmäßigter Abrieb ermöglicht wird.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, gemäß den Merkmalen von Anspruch 1 gelöst, bei dem die erste Gürtellage und die zweite Gürtellage Arbeitslagen sind, bei denen die Festigkeitsträger der ersten Gürtellage in ihrer Ausrichtung einen Winkel α zur Umfangsrichtung U mit 10°≤α≤45° und die Festigkeitsträger der zweiten Gürtellage in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger der ersten Gürtellage eine entgegengesetzte axiale Neigungsrichtung zu den Festigkeitsträgern der zweiten Gürtellage aufweisen, und bei dem die Festigkeitsträger der vierten Gürtellage in ihrer Ausrichtung einen Winkel ε zur Umfangsrichtung U mit 40°≤ε≤75° und die Festigkeitsträger der dritten Gürtellage in ihrer Ausrichtung einen Winkel β zur Umfangsrichtung U mit 0°≤β≤5° einschließen, wobei radial außerhalb der vierten Gürtellage auf der vierten Gürtellage eine fünfte Gürtellage angeordnet ist mit parallelen in Gummi eingebetteten Festigkeitsträgern, die in ihrer Ausrichtung einen Winkel δ zur Umfangsrichtung U des Fahrzeugluftreifens mit 40°≤δ≤75° einschließen, und wobei in Umfangsrichtung U des Fahrzeugreifens gesehen die Festigkeitsträger der fünften Gürtellage eine entgegengesetzte axiale Neigungsrichtung zu den Festigkeitsträgern der vierten Gürtellage aufweisen.

Die Ausbildung ermöglicht die Beibehaltung der hinsichtlich guter Kraftübertragung in Umfangs- und Querrichtung und geringem Abrieb vorteilhaften Ausbildung mit zwei Arbeitslagen, einer 0°-Lage und einer radial inneren Sperrlage. Darüber hinaus hat sich herausgestellt, dass sich durch erfindungsgemäße Anordnung der Gürtellagen der Abrieb über die Gürtelbreite weiter vergleichmäßigt und reduziert werden kann.

Die Ausbildung ermöglicht die Beibehaltung der hinsichtlich Kraftübertragung in Umfangs- und Querrichtung und geringem Abrieb vorteilhaften Ausbildung mit zwei Arbeitslagen einer 0°-Lage und einer radial inneren Sperrlage. Darüber hinaus hat sich herausgestellt, dass sich diese Anordnung der Gürtellagen der Abrieb über die Gürtelbreite weiter vergleichmäßigt und reduziert werden kann. Die durch die Ausbildung mit der fünften Gürtellage bedingte Kreuzlagenanordnung bewirkt eine zusätzliche Steifigkeit und ermöglicht eine gleichmäßigere Kraftübertragung in der vierten und fünften Gürtellage.

Besonders vorteilhaft ist die Ausbildung eines Fahrzeugluftreifens gemäß den Merkmalen von Anspruch 2, wobei die erste Gürtellage in ihrer axialen Erstreckung im Fahrzeugluftreifen größer ausgebildet ist als alle anderen Gürtellagen des Gürtels. Dies ermöglicht eine Entkopplung der Gürtellagen, wodurch die Haltbarkeit des Reifens weiter verbessert werden kann.

Besonders vorteilhaft ist die Ausbildung eines Fahrzeugluftreifens gemäß den Merkmalen von Anspruch 3, wobei die dritte Gürtellage in ihrer axialen Erstreckung im Fahrzeugluftreifen kleiner ausgebildet ist als die erste und als die zweite Gürtellage des Gürtels. Dies ermöglicht einen gleichmäßigen Steifigkeitsanstieg von Gürtelkante zur Gürtelmitte, wodurch guter Abrieb und lange, strukturelle Haltbarkeit weiter begünstigt werden.

Besonders vorteilhaft ist die Ausbildung eines Fahrzeugluftreifens gemäß den Merkmalen von Anspruch 4, bei dem δ =50° ist.

Besonders vorteilhaft ist die Ausbildung eines Fahrzeugluftreifens gemäß den Merkmalen von Anspruch 5, wobei die vierte und fünfte Gürtellage in ihrer axialen Erstreckung im Fahrzeugluftreifen kleiner als die erste und zweite Gürtellage ausgebildet ist. Hierdurch kann die Steifigkeit in den Schulterbereichen des Gürtels zur Erzielung eines besonders günstigen Abriebbildes optimiert werden.

Besonders vorteilhaft ist die Ausbildung eines Fahrzeugluftreifens gemäß den Merkmalen von Anspruch 6, wobei die Festigkeitsträger der ersten Gürtellage und die Festigkeitsträger der zweiten Gürtellage Stahlkorde sind.

Besonders vorteilhaft ist die Ausbildung eines Fahrzeugluftreifens gemäß den Merkmalen von Anspruch 7, wobei die Festigkeitsträger der beiden Arbeitslagen im Reifen dehnbar ausgebildet sind mit einer Dehnung D von D ≥ 0,2% bei 10% der Bruchkraft. Hierdurch kann durch Flexibilität des Gürtelpakets die Haltbarkeit des Reifens weiter begünstigt werden.

Besonders vorteilhaft ist die Ausbildung eines Fahrzeugluftreifens gemäß den Merkmalen von Anspruch 8, wobei die Festigkeitsträger der dritten Gürtellage Festigkeitsträger aus Stahl sind. Hierdurch wird eine hohe Umfangssteifigkeit und eine gute Haltbarkeit und gleichmäßiger Abrieb weiter begünstigt. Zusätzlich wird ein kontrolliertes Reifenwachstum begünstigt.

Besonders vorteilhaft ist die Ausbildung eines Fahrzeugluftreifens gemäß den Merkmalen von Anspruch 9, wobei die Festigkeitsträger der dritten Gürtellage Stahlkorde sind, die bei 10% der Bruchkraft eine Dehnung D mit D≥0,2 % - insbesondere mit D≥1% - aufweisen.

Hierdurch kann in einfacher Weise die Erhebung des Gürtels im Aufbauprozess ermöglicht werden.

Besonders vorteilhaft ist die Ausbildung eines Fahrzeugluftreifens gemäß den Merkmalen von Anspruch 10, wobei die Festigkeitsträger der vierten Gürtellage Stahlkorde sind. Besonders vorteilhaft ist die Ausbildung eines Fahrzeugluftreifens gemäß den Merkmalen von Anspruch 11, wobei die Festigkeitsträger der fünften Gürtellage Stahlkorde sind. Besonders vorteilhaft ist die Ausbildung eines Fahrzeugluftreifens gemäß den Merkmalen von Anspruch 12, wobei in Umfangsrichtung U gesehen die Festigkeitsträger der ersten Gürtellage und die Festigkeitsträger der vierten Gürtellage die gleiche axiale Neigungsrichtung aufweisen. Hierdurch kann ein verbessertes Abriebbild ermöglicht werden.

Besonders vorteilhaft ist die Ausbildung eines Fahrzeugluftreifens gemäß den Merkmalen von Anspruch 13, wobei in Umfangsrichtung U gesehen die Festigkeitsträger der zweiten Gürtellage und die Festigkeitsträger der vierten Gürtellage die gleiche axiale Neigungsrichtung aufweisen. Dies begünstigt eine besonders steife Konstruktion des Gürtels.

Die Erfindung wird im Folgenden an Hand der in den Fig.1 bis Fig.4 dargestellten Ausführungsbeispiele eines Nutzfahrzeugluftreifens radialer Bauart erläutert. Darin zeigen
- Fig.1: die Querschnittsdarstellung eines nicht erfindungsgemäßen Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind,
- Fig.3: eine Querschnittdarstellung eines Fahrzeugluftreifens analog zur Darstellung von Fig.1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind.

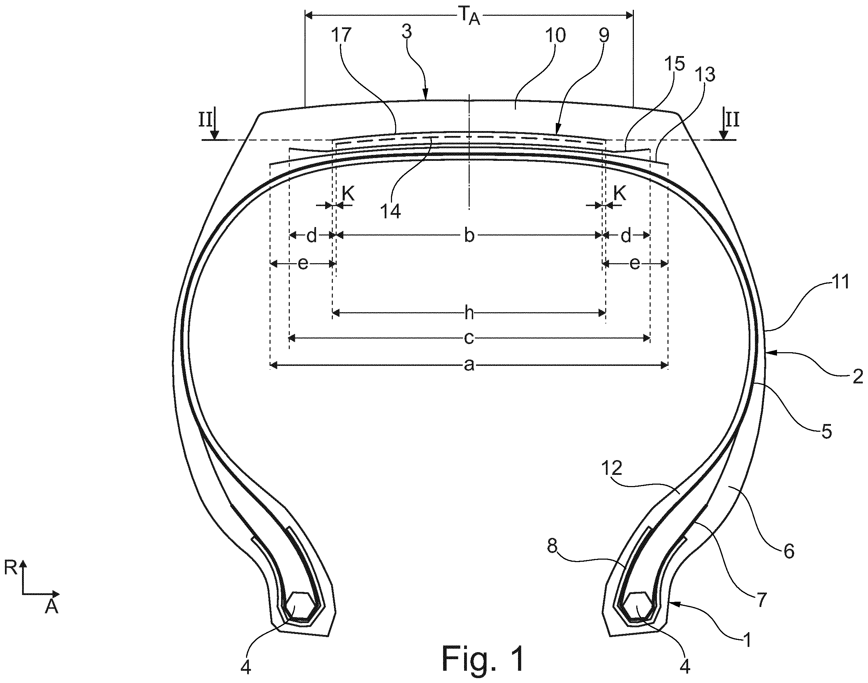

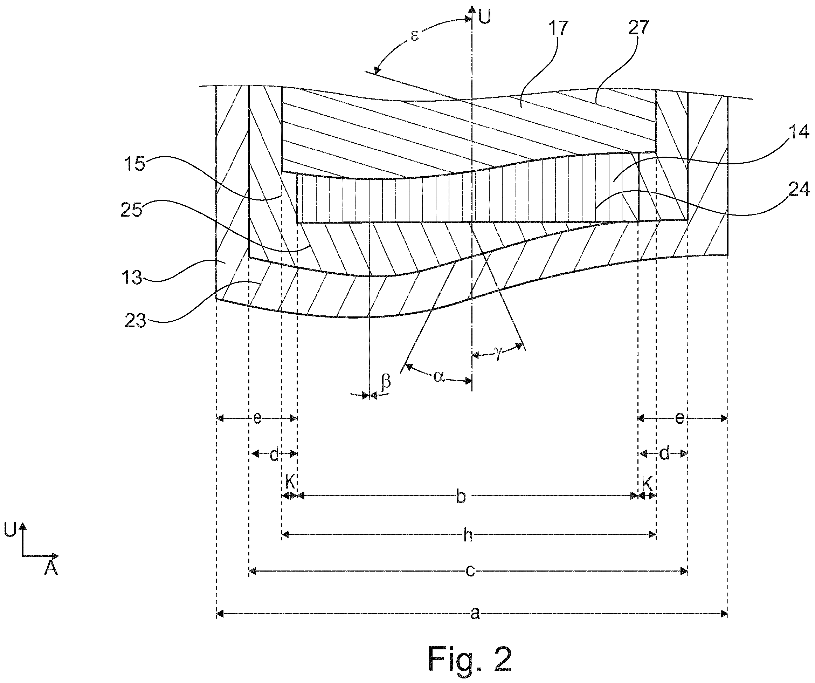

Fig.1 und Fig.2 zeigen einen nicht erfindungsgemäßen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 7. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden -, welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus vier in radialer Richtung R von innen nach außen übereinander und aufeinanderliegend angeordneten Gürtellagen,13, 15,14 und 17 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die in radialer Richtung R am weitesten innen angeordnete Gürtellage 13 des Gürtels bildet die erste Gürtellage 13. Die in radialer Richtung R außerhalb der ersten Gürtellage 13 auf der ersten Gürtellage 13 angeordnete Gürtellage 15 bildet die zweite Gürtellage 15. Die in radialer Richtung R außerhalb der zweiten Gürtellage 15 auf der zweiten Gürtellage 15 angeordnete Gürtellage 14 bildet die dritte Gürtellage 14. Die in radialer Richtung R außerhalb der dritten Gürtellage 14 auf der dritten Gürtellage 14 angeordnete Gürtellage 17 bildet die vierte Gürtellage 17.

Die Gürtellage 13 und die Gürtellage 15 sind als Arbeitslagen des Reifens ausgebildet und erstrecken sich jeweils in Umfangsrichtung U über den gesamten Umfang des Fahrzeugluftreifens in Berührkontakt zu einander und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet.

Die in radialer Richtung R zwischen vierter Gürtellage 17 und der zweiten Gürtellage (obere Arbeitslage) 15 ausgebildete dritte Gürtellage 14 erstreckt sich in Umfangsrichtung U über den gesamten Umfang des Fahrzeugluftreifens und in axialer Richtung A von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind.

Alle vier Gürtellagen 13,15, 14 und 17 erstrecken sich zu beiden axialen Seiten jeweils bis in eine Position in der jeweiligen Reifenschulter. Die Gürtellage 14 ist zumindest über einen Teil ihrer axialen Erstreckung in direktem Berührkontakt zu der unter ihr angeordneten zweiten Gürtellage (obere Arbeitslage) 15.

Die dritte Gürtellage (0°-Lage) 14 erstreckt sich in axialer Richtung A über eine axiale Breite b, die erste Gürtellage (untere Arbeitslage) 13 erstreckt sich in axialer Richtung A über eine axiale Breite a und die zweite Gürtellage (obere Arbeitslage) 15 erstreckt sich in axialer Richtung A über eine axiale Breite c im Reifen mit a > c > b. Dabei erstreckt sich zu beiden axialen Seiten der dritten Gürtellage 14 die erste Gürtellage 13 um eine axiale Erstreckungslänge e über die axiale Position des jeweiligen Gürtelrandes der zweiten Gürtellage 14 hinaus. Ebenso erstreckt sich die zweite Gürtellage 15 in beide axiale Richtungen jeweils um eine axiale Erstreckungslänge d über die axiale Position des jeweiligen Gürtelrandes der dritten Gürtellage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet.

Die auf der dritten Gürtellage 14 angeordnete vierte Gürtellage 17 erstreckt sich in Umfangsrichtung U über den gesamten Umfang des Fahrzeugluftreifens und in axialer Richtung A des Fahrzeugluftreifens von linker Reifenschulter bis zur rechten Reifenschulter. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 40° ≤ ε ≤ 75°, beispielsweise mit ε = 50°.

Die Festigkeitsträger 27 der vierten Gürtellage 17 sind - wie in Fig.2 dargestellt - mit einer längs der Erstreckung in Umfangsrichtung U des Reifens gesehen gleichen axialen Neigungsrichtung wie die Festigkeitsträger 25 der zweiten Gürtellage (obere Arbeitslage) 15 und somit mit einer entgegengesetzten axialen Neigungsrichtung wie die Festigkeitsträger 23 der ersten Gürtellage (untere Arbeitslage) 13 ausgerichtet.

In anderer - nicht dargestellter -Ausführung sind die Festigkeitsträger 27 der vierten Gürtellage 17 mit einer längs der Erstreckung in Umfangsrichtung U des Reifens gesehen gleichen axialen Neigungsrichtung wie die Festigkeitsträger 23 der ersten Gürtellage (untere Arbeitslage) 13 und somit mit einer entgegengesetzten axialen Neigungsrichtung wie die Festigkeitsträger 25 der zweiten Gürtellage (obere Arbeitslage) 15 ausgerichtet.

Die Gürtellage 17 erstreckt sich längs der gesamten axiale Erstreckung der dritten Gürtellage 14 in unmittelbarem Berührkontakt zur dritten Gürtellage 14 und endet in axialer Richtung A mit ihren beiden Gürtellagenrändern jeweils in einer axialen Position zwischen der axialen Position des nächstliegenden Gürtellagenrandes der dritten Gürtellage 14 und der axialen Position des nächstliegenden Gürtellagenrandes der zweiten Gürtellage (radial äußeren Arbeitslage) 15 im axialen Abstand k vom Gürtellagenrand der dritten Gürtellage 14 mit k < d < e. Die Breite h ist das Maß der axialen Erstreckung der vierten Gürtellage 17 mit b < h < c < a.

Die Festigkeitsträger 27 sind Stahlkorde bekannter Art, beispielsweise des Typs "1+5" oder des Typs "3+6" ", des Typs "3+8" oder des Typs "3+9".

Die Festigkeitsträger 23 und 25 der beiden Arbeitslagen 13 und 15 sind dehnbare Stahlkorde bekannter Art, die bei Belastung auf Zug eine Bruchkraft F von F>2500N und bei 10% der Bruchkraft eine Dehnung D von D≥0,2% - beispielsweise mit 0,28% ≤ D ≤ 0,32% -aufweisen. Die Dehnung D der Festigkeitsträger ist dabei diejenige Dehnung, die beim vulkanisierten Reifen an dem von der Lage extrahierten Festigkeitsträger bestimmt wird. Die Messung der Dehnung erfolgt an Festigkeitsträger, die mit ihrer vollen Länge dem fertig vulkanisierten Reifen entnommen sind. Der Festigkeitsträger wird zur Messung soweit von Gummiresten befreit, dass der Festigkeitsträger mit der am Festigkeitsträger verbleibender Gummimenge keinen Durchmesser aufweist, der größer ist als der 1,5-fache maximale Außendurchmesser des ungummierten Festigkeitsträgers. Die Bestimmung der Dehnung erfolgt gemäß ASTM D 2969 - 04.

Die Festigkeitsträger 23 und 25 sind beispielsweise Stahlkorde des Typs "3+8x0,35HT" mit einer Bruchkraft F, welche ca. 3000N beträgt, und mit einer Dehnung D von D>0,2% bei 10% der Bruchkraft.

Die Festigkeitsträger 24 sind in einer Ausführung Stahlkorde bekannter Art. In einer anderen Ausführung sind die Festigkeitsträger 24 Stahlkorde, die bei 10% der Bruchkraft eine Dehnung D mit D ≥ 0,2% - beispielsweise mit D = 0,5% - aufweisen. In einer Ausführung sind die Festigkeitsträger 24 Stahlkorde, die bei 10% der Bruchkraft eine Dehnung D mit D ≥ 1% - beispielsweise mit D = 1,3% - aufweisen.

Die Festigkeitsträger 24 sind beispielsweise Stahlkorde des Typs "3x7 HEHT".

In einem Ausführungsbeispiel ist β = 3°, α = 18°, γ = 18°, ε = 50°, d = 11 mm, k=8mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

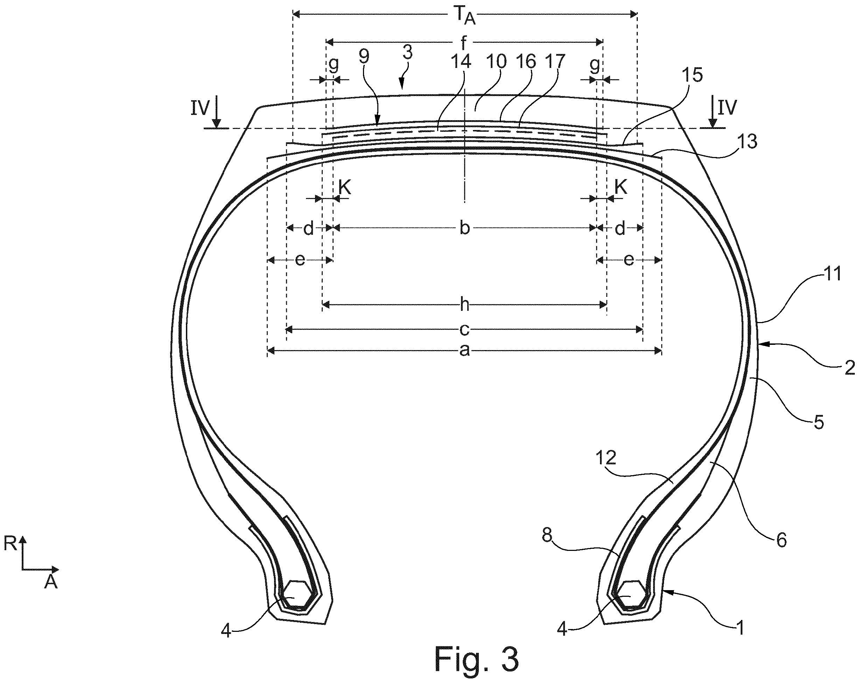

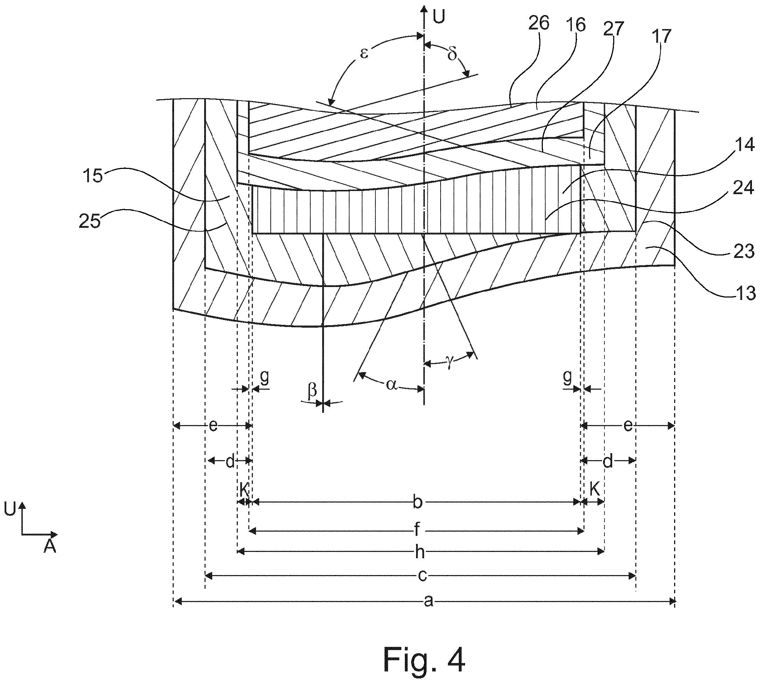

Fig.3 und Fig.4 zeigen eine weitere alternative Ausführung, bei der der Gürtel 9 zusätzlich zu den in den Fig.1 und Fig.2 dargestellten Gürtellagen 13,15, 14 und 17 auf der radialen Außenseite der vierten Gürtellage 17 mit einer zusätzlichen, fünften Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 40°≤δ≤75°, beispielsweise mit δ =50°. Die Gürtellage 16 erstreckt sich über ihre gesamte axiale Erstreckung in unmittelbarem Berührkontakt zur Gürtellage 17 und endet in axialer Richtung A mit ihren beiden Gürtellagenrändern jeweils in einer axialen Position zwischen der axialen Position des nächstliegenden Gürtellagenrandes der dritten Gürtellage 14 und der axialen Position des nächstliegenden Gürtellagenrandes der zweiten Gürtellage (radial äußeren Arbeitslage) 15 im axialen Abstand g vom Gürtellagenrand der dritten Gürtellage 14 mit g < d. Die Breite f ist das Maß der axialen Erstreckung der fünften Gürtellage 16 mit b < f < c < a.

In einem weiteren - in den Figuren 3 und 4 dargestellten - Ausführungsbeispiel ist zusätzlich f< h und g < k gewählt ausgebildet.

Die Festigkeitsträger 26 der fünften Gürtellage 16 sind jeweils - wie in Fig.4 dargestellt - mit einer längs der Erstreckung in Umfangsrichtung U des Reifens gesehen entgegengesetzten axialen Neigungsrichtung wie die Festigkeitsträger 27 der vierten Gürtellage17 ausgerichtet.

Die Festigkeitsträger 26 sind Stahlkorde bekannter Art, beispielsweise des Typs "1+5" oder des Typs "3+6" ", des Typs "3+8" oder des Typs "3+9".

In den oben im Zusammenhang mit den Figuren 1 bis 4 genannten Ausführungsbeispielen genannten Ausführungsbeispielen sind die Festigkeitsträger 27 bzw. die Festigkeitsträger 26 Stahlkorde. In anderer, nicht dargestellter Ausführung sind die Festigkeitsträger 26 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind. In anderer, nicht dargestellter Ausführung sind die Festigkeitsträger 27 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

In anderer, nicht dargestellter Ausführung sind auch die Festigkeitsträger 23 und/oder die Festigkeitsträger 24 und/oder Festigkeitsträger 25 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

### Bezugszeichenliste

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens vier von radial innen nach radial außen auf einander liegend angeordneten Gürtellagen (13,15,14,17) ausgebildet ist, wobei die in radialer Richtung R am weitesten innen angeordnete, erste Gürtellage (13) mit parallelen in Gummi eingebetteten Festigkeitsträgern (23), die auf der ersten Gürtellage (13) angeordnete zweite Gürtellage (15) mit parallelen in Gummi eingebetteten Festigkeitsträgern (25), die auf der zweiten Gürtellage (15) angeordnete dritte Gürtellage (14) mit parallelen in Gummi eingebetteten Festigkeitsträgern (24) und die auf der dritten Gürtellage (14) angeordnete vierte Gürtellage (17) mit parallelen in Gummi eingebetteten Festigkeitsträgern (27) ausgebildet ist, wobei die erste Gürtellage (13) und die zweite Gürtellage (15) Arbeitslagen sind, bei denen die Festigkeitsträger (23) der ersten Gürtellage (13) in ihrer Ausrichtung einen Winkel α zur Umfangsrichtung U mit 10°≤α≤45° und die Festigkeitsträger (25) der zweiten Gürtellage (15) in ihrer Ausrichtung jeweils einen Winkel γ zur Umfangsrichtung U mit 10°≤γ<45°einschließen, wobei in Umfangsrichtung U des Fahrzeugreifens gesehen die Festigkeitsträger (23) der ersten Gürtellage (13) eine entgegengesetzte axiale Neigungsrichtung zu den Festigkeitsträgern (25) der zweiten Gürtellage (15) aufweisen, und wobei die Festigkeitsträger (27) der vierten Gürtellage (17) in ihrer Ausrichtung einen Winkel ε zur Umfangsrichtung U mit 40°≤ε≤75° und die Festigkeitsträger (24) der dritten Gürtellage (14) in ihrer Ausrichtung einen Winkel β zur Umfangsrichtung U mit 0°≤β≤5° einschließen,
**dadurch gekennzeichnet,.**
**dass** radial außerhalb der vierten Gürtellage (17) auf der vierten Gürtellage (17) eine fünfte Gürtellage (16) angeordnet ist mit parallelen in Gummi eingebetteten Festigkeitsträgern (26), die in ihrer Ausrichtung einen Winkel δ zur Umfangsrichtung U des Fahrzeugluftreifens mit 40°≤δ≤75° einschließen, und dass in Umfangsrichtung U des Fahrzeugreifens gesehen die Festigkeitsträger (26) der fünften Gürtellage (16) eine entgegengesetzte axiale Neigungsrichtung zu den Festigkeitsträgern (27) der vierten Gürtellage (17) aufweisen.

2. Fahrzeugluftreifen gemäß den Merkmalen von Anspruch 1,
wobei die erste Gürtellage (13) in ihrer axialen Erstreckung im Fahrzeugluftreifen größer ausgebildet ist als alle anderen Gürtellagen (14,15,17) des Gürtels.

3. Fahrzeugluftreifen gemäß den Merkmalen von Anspruch 1 oder 2,
wobei die dritte Gürtellage (14) in ihrer axialen Erstreckung im Fahrzeugluftreifen kleiner ausgebildet ist als die erste Gürtellage (13) und als die zweite Gürtellage (15) des Gürtels.

4. Fahrzeugluftreifen gemäß den Merkmalen von einem der vorangegangenen Ansprüche,
wobei δ =50°ist.

5. Fahrzeugluftreifen gemäß den Merkmalen von Anspruch **1,**
wobei die vierte und fünfte Gürtellage (17,16) in ihrer axialen Erstreckung im Fahrzeugluftreifen kleiner als die erste und zweite Gürtellage (13,15) ausgebildet ist.

6. Fahrzeugluftreifen gemäß den Merkmalen von einem oder mehreren der vorangegangenen Ansprüche,
wobei die Festigkeitsträger (23) der ersten Gürtellage (13) und die Festigkeitsträger (25) der zweiten Gürtellage (15) Stahlkorde sind.

7. Fahrzeugluftreifen gemäß den Merkmalen von einem oder mehreren der vorangegangenen Ansprüche,
wobei die Festigkeitsträger (23,25) der beiden Arbeitslagen (13,15) im Reifen dehnbar ausgebildet sind mit einer Dehnung D von D ≥ 0,2% bei 10% der Bruchkraft.

8. Fahrzeugluftreifen gemäß den Merkmalen von einem oder mehreren der vorangegangenen Ansprüche,
wobei die Festigkeitsträger (24) der dritten Gürtellage (14) Festigkeitsträger aus Stahl sind.

9. Fahrzeugluftreifen gemäß den Merkmalen von einem oder mehreren der Ansprüche 1 bis 8,
wobei die Festigkeitsträger (24) der dritten Gürtellage (14) Stahlkorde sind, die bei 10% der Bruchkraft eine Dehnung D mit D≥ 0,2 % - insbesondere mit D≥1% - aufweisen.

10. Fahrzeugluftreifen gemäß den Merkmalen von einem oder mehreren der vorangegangenen Ansprüche,
wobei die Festigkeitsträger (27) der vierten Gürtellage (17) Stahlkorde sind.

11. Fahrzeugluftreifen gemäß den Merkmalen von Anspruch **1,**
wobei die Festigkeitsträger (26) der fünften Gürtellage (16) Stahlkorde sind

12. Fahrzeugluftreifen gemäß den Merkmalen von einem der Ansprüche 1 bis 11,
wobei in Umfangsrichtung U gesehen die Festigkeitsträger (23) der ersten Gürtellage (13) und die Festigkeitsträger (27) der vierten Gürtellage (17) die gleiche axiale Neigungsrichtung aufweisen.

13. Fahrzeugluftreifen gemäß den Merkmalen von einem der Ansprüche 1 bis 11,
wobei in Umfangsrichtung U gesehen die Festigkeitsträger (25) der zweiten Gürtellage (15) und die Festigkeitsträger (27) der vierten Gürtellage (17) die gleiche axiale Neigungsrichtung aufweisen.

## Claims

1. Pneumatic vehicle tire for utility vehicles, having a carcass (5), having a belt (9) which is constructed radially outside the carcass (5) and having a profiled tread (10) which is constructed on the belt (9) radially outside the belt (9), wherein the belt (9) is formed from at least four belt plies (13, 15, 14, 17) arranged lying one on top of the other from the radial inside to the radial outside, wherein the first belt ply (13), which is arranged furthest to the inside in the radial direction R, is formed with parallel strength members (23) embedded in rubber, the second belt ply (15), arranged on the first belt ply (13), is formed with parallel strength members (25) embedded in rubber, the third belt ply (14), arranged on the second belt ply (15), is formed with parallel strength members (24) embedded in rubber, and the fourth belt ply (17), arranged on the third belt ply (14), is formed with parallel strength members (27) embedded in rubber, wherein the first belt ply (13) and the second belt ply (15) are working plies, in which the strength members (23) of the first belt ply (13) enclose, in terms of their orientation, an angle α with the circumferential direction U, where 10° ≤ α ≤ 45°, and the strength members (25) of the second belt ply (15) each enclose, in terms of their orientation, an angle γ with the circumferential direction U, where 10° ≤ γ ≤ 45°, wherein, as viewed in the circumferential direction U of the vehicle tire, the strength members (23) of the first belt ply (13) have an opposite axial direction of inclination in relation to the strength members (25) of the second belt ply (15), and wherein the strength members (27) of the fourth belt ply (17) enclose, in terms of their orientation, an angle ε with the circumferential direction U, where 40° ≤ ε ≤ 75°, and the strength members (24) of the third belt ply (14) enclose, in terms of their orientation, an angle β with the circumferential direction U, where 0° ≤ β ≤ 5°,
**characterized**
**in that**, radially outside the fourth belt ply (17) and on the fourth belt ply (17), there is arranged a fifth belt ply (16) with parallel strength members (26) embedded in rubber, which strength members, in terms of their orientation, enclose an angle δ with the circumferential direction U of the pneumatic vehicle tire, where 40° ≤ δ ≤ 75° and in that, as viewed in the circumferential direction U of the vehicle tire, the strength members (26) of the fifth belt ply (16) have an opposite axial direction of inclination relative to the strength members (27) of the fourth belt ply (17).

2. Pneumatic vehicle tire as per the features of Claim 1,
wherein the first belt ply (13) is formed so as to be larger, in terms of its axial extent in the pneumatic vehicle tire, than all of the other belt plies (14, 15, 17) of the belt.

3. Pneumatic vehicle tire as per the features of Claim 1 or 2,
wherein the third belt ply (14) is formed so as to be smaller, in terms of its axial extent in the pneumatic vehicle tire, than the first belt ply (13) and than the second belt ply (15) of the belt.

4. Pneumatic vehicle tire as per the features of one of the preceding claims,
wherein δ = 50°.

5. Pneumatic vehicle tire as per the features of Claim 1,
wherein the fourth and fifth belt plies (17, 16) are formed so as to be smaller, in terms of their axial extent in the pneumatic vehicle tire, than the first and second belt plies (13, 15).

6. Pneumatic vehicle tire as per the features of one or more of the preceding claims,
wherein the strength members (23) of the first belt ply (13) and the strength members (25) of the second belt ply (15) are steel cords.

7. Pneumatic vehicle tire as per the features of one or more of the preceding claims,
wherein the strength members (23, 25) of the two working plies (13, 15) in the tire are designed to be extensible, with an elongation D of D ≥ 0.2% at 10% of the breaking force.

8. Pneumatic vehicle tire as per the features of one or more of the preceding claims,
wherein the strength members (24) of the third belt ply (14) are strength members composed of steel.

9. Pneumatic vehicle tire as per the features of one or more of Claims 1 to 8,
wherein the strength members (24) of the third belt ply (14) are steel cords which, at 10% of the breaking force, exhibit an elongation D of D ≥ 0.2 % - in particular of D ≥ 1%.

10. Pneumatic vehicle tire as per the features of one or more of the preceding claims,
wherein the strength members (27) of the fourth belt ply (17) are steel cords.

11. Pneumatic vehicle tire as per the features of Claim 1,
wherein the strength members (26) of the fifth belt ply (16) are steel cords.

12. Pneumatic vehicle tire as per the features of one of Claims 1 to 11,
wherein, as viewed in the circumferential direction U, the strength members (23) of the first belt ply (13) and the strength members (27) of the fourth belt ply (17) have the same axial direction of inclination.

13. Pneumatic vehicle tire as per the features of one of Claims 1 to 11,
wherein, as viewed in the circumferential direction U, the strength members (25) of the second belt ply (15) and the strength members (27) of the fourth belt ply (17) have the same axial direction of inclination.

## Revendications

1. Pneumatique de véhicule pour véhicules utilitaires, comprenant une carcasse (5), une ceinture (9) de construction radiale à l'extérieur de la carcasse (5) et une bande de roulement profilée (10) construite sur la ceinture (9) radialement à l'extérieur de la ceinture (9), la ceinture (9) étant constituée d'au moins quatre couches de ceinture (13, 15, 14, 17) disposées les unes au-dessus des autres radialement de l'intérieur vers l'extérieur, la première couche de ceinture (13) disposée la plus à l'intérieur dans la direction radiale R étant réalisée avec des renforts (23) parallèles noyés dans du caoutchouc, la deuxième couche de ceinture (15) disposée sur la première couche de ceinture (13) étant réalisée avec des renforts (25) parallèles noyés dans du caoutchouc, la troisième couche de ceinture (14) disposée sur la deuxième couche de ceinture (15) étant réalisée avec des renforts (24) parallèles noyés dans du caoutchouc et la quatrième couche de ceinture (17) disposée sur la troisième couche de ceinture (14) étant réalisée avec des renforts (27) parallèles noyés dans du caoutchouc, la première couche de ceinture (13) et la deuxième couche de ceinture (15) étant des couches de travail, dans lesquelles les renforts (23) de la première couche de ceinture (13) forment dans leur orientation un angle α par rapport à la direction périphérique U avec 10° ≤ α ≤ 45° et les renforts (25) de la deuxième couche de ceinture (15) forment dans leur orientation à chaque fois un angle γ par rapport à la direction périphérique U avec 10° ≤ γ ≤ 45°, les renforts (23) de la première couche de ceinture (13), vus dans la direction périphérique U du pneumatique du véhicule, présentant une direction d'inclinaison axiale opposée aux renforts (25) de la deuxième couche de ceinture (15), et les renforts (27) de la quatrième couche de ceinture (17) formant dans leur orientation un angle ε par rapport à la direction périphérique U avec 40° ≤ ε ≤ 75°, et les renforts (24) de la troisième couche de ceinture (14) formant, dans leur orientation, un angle β par rapport à la direction périphérique U, avec 0° ≤ β ≤ 5°, **caractérisé en ce qu'**une cinquième couche de ceinture (16) est disposée sur la quatrième couche de ceinture (17) radialement à l'extérieur de la quatrième couche de ceinture (17), laquelle cinquième couche de ceinture est dotée de renforts (26) parallèles noyés dans du caoutchouc qui forment dans leur orientation un angle δ par rapport à la direction périphérique U du pneumatique de véhicule avec 40° ≤ δ ≤ 75°, et **en ce que** les renforts (26) de la cinquième couche de ceinture (16), vus dans la direction périphérique U du pneumatique du véhicule, présentent une direction d'inclinaison axiale opposée aux renforts (27) de la quatrième couche de ceinture (17).

2. Pneumatique de véhicule selon les caractéristiques de la revendication 1,
dans lequel la première couche de ceinture (13), dans son étendue axiale dans le pneumatique de véhicule, est plus grosse que toutes les autres couches de ceinture (14, 15, 17) de la ceinture.

3. Pneumatique de véhicule selon les caractéristiques de la revendication 1 ou 2,
dans lequel la troisième couche de ceinture (14), dans son étendue axiale dans le pneumatique de véhicule, est plus petite que la première couche de ceinture (13) et que la deuxième couche de ceinture (15) de la ceinture.

4. Pneumatique de véhicule selon les caractéristiques de l'une des revendications précédentes,
dans lequel δ = 50°.

5. Pneumatique de véhicule selon les caractéristiques de la revendication 1,
dans lequel la quatrième et la cinquième couche de ceinture (17, 16), dans leur étendue axiale dans le pneumatique de véhicule, sont plus petites que la première et la deuxième couche de ceinture (13, 15).

6. Pneumatique de véhicule selon les caractéristiques d'une ou plusieurs des revendications précédentes,
dans lequel les renforts (23) de la première couche de ceinture (13) et les renforts (25) de la deuxième couche de ceinture (15) sont des câbles d'acier.

7. Pneumatique de véhicule selon les caractéristiques d'une ou plusieurs des revendications précédentes,
dans lequel les renforts (23, 25) des deux couches de travail (13, 15) dans le pneu sont réalisés de manière extensible avec un allongement D, avec D ≥ 0,2 % à 10 % de la force de rupture.

8. Pneumatique de véhicule selon les caractéristiques d'une ou plusieurs des revendications précédentes,
dans lequel les renforts (24) de la troisième couche de ceinture (14) sont des renforts en acier.

9. Pneumatique de véhicule selon les caractéristiques d'une ou plusieurs des revendications 1 à 8,
dans lequel les renforts (24) de la troisième couche de ceinture (14) sont des câbles d'acier, qui présentent, à 10 % de la force de rupture, un allongement D avec D ≥ 0,2 %, en particulier avec D ≥ 1 %.

10. Pneumatique de véhicule selon les caractéristiques d'une ou plusieurs des revendications précédentes,
dans lequel les renforts (27) de la quatrième couche de ceinture (17) sont des câbles d'acier.

11. Pneumatique de véhicule selon les caractéristiques de la revendication 1,
dans lequel les renforts (26) de la cinquième couche de ceinture (16) sont des câbles d'acier.

12. Pneumatique de véhicule selon les caractéristiques de l'une des revendications 1 à 11,
dans lequel les renforts (23) de la première couche de ceinture (13) et les renforts (27) de la quatrième couche de ceinture (17), vus dans la direction périphérique U, présentent la même direction d'inclinaison axiale.

13. Pneumatique de véhicule selon les caractéristiques de l'une des revendications 1 à 11,
dans lequel les renforts (25) de la deuxième couche de ceinture (15) et les renforts (27) de la quatrième couche de ceinture (17), vus dans la direction périphérique U, présentent la même direction d'inclinaison axiale.
